# EUROPÄISCHE PATENTSCHRIFT

(11) **EP 3 798 104 B1**
(45) Veröffentlichungstag und Bekanntmachung des Hinweises auf die Patenterteilung: **10.01.2024**
(21) Anmeldenummer: 20186673.8
(22) Anmeldetag: 20.07.2020
(51) Int. Cl.: B62D 25/18, A01B 76/00

(54) **LANDWIRTSCHAFTLICHES FAHRZEUG**
AGRICULTURAL VEHICLE
VÉHICULE AGRICOLE

(30) Priorität: 24.09.2019 DE 102019125626
(43) Veröffentlichungstag der Anmeldung: 31.03.2021
(73) Patentinhaber: CLAAS Tractor S.A.S., 78141 Vélizy-Villacoublay Cedex (FR)
(72) Erfinder: BRUNEAU, Eric, 72550 Coulans sur gée (FR)
(74) Vertreter: CLAAS Gruppe

(56) Entgegenhaltungen:
- EP-A1- 3 318 473
- DE-U- 1 976 093
- US-A1- 2016 128 278

## Beschreibung

Die vorliegende Erfindung betrifft ein landwirtschaftliches Fahrzeug gemäß dem Oberbegriff von Anspruch 1.

Der bekannte Stand der Technik (US 2016/128278 A1), von dem die Erfindung ausgeht, betrifft ein landwirtschaftliches Fahrzeug gemäß dem Oberbegriff von Anspruch 1. Die Schriften DE 1 976 093 U und EP 3 318 473 A1 beschreiben weitere bekannte Kotflügel.

Bei den in Rede stehenden landwirtschaftlichen Fahrzeugen kann es sich um jedwedes motorgetriebene Fahrzeug handeln, das zur Nutzung bei der Abarbeitung eines landwirtschaftlichen Arbeitsprozesses, beispielsweise eines Bodenbearbeitungs-, Ernte- oder Transportprozesses, dient. Dazu zählen landwirtschaftliche Zugmaschinen, insbesondere Traktoren, aber auch Radlader, Teleskoplader, Hoflader oder dergleichen. Fahrzeuge dieser Art können häufig mit einem Anbaugerät oder Transportanhänger gekoppelt werden. Zu den Anbaugeräten, bei denen es sich um vom Fahrzeug getragene und/oder gezogene Arbeitsaggregate zur Durchführung oder Unterstützung landwirtschaftlicher Arbeit handelt, zählen insbesondere Mähwerke, Wender, Schwader, Ballenpressen oder Bodenbearbeitungsgeräte wie Pflüge, Grubber, Eggen oder dergleichen. Zu den Transportanhängern zählen insbesondere Ernteguttransportwagen, Gülletankwagen, Kombiwagen oder dergleichen.

Bei landwirtschaftlichen Fahrzeugen, beispielsweise Traktoren, kommt es in dem Arbeitsumfeld, in dem diese eingesetzt werden, häufig zu erheblichen Verschmutzungen des Fahrzeugs. Speziell bei der Durchführung landwirtschaftlicher Arbeit auf einem Feld sammelt sich im Profil der Bodeneingriffsmittel, insbesondere der Reifen, häufig Erde an. Durch die Kotflügel, die einen Umfangsabschnitt der Bodeneingriffsmittel radial überdecken, kann eine von der Drehbewegung der Bodeneingriffsmittel herrührende Verschmutzung, beispielsweise durch hochgeschleuderte Erde, weitgehend vermieden werden.

Es ist dabei eine Herausforderung, Kotflügel vorzusehen, die einerseits die Bodeneingriffsmittel möglichst weit radial überdecken, um eine Verschmutzung durch beispielsweise hochgeschleuderte Erde möglichst optimal zu vermeiden, andererseits aber auch das Ankoppeln einer möglichst großen Anzahl unterschiedlicher Anbaugeräte und/oder Transportanhänger an das landwirtschaftliche Fahrzeug zu erlauben, ohne dass dabei die Kotflügel das Ankoppeln oder den Betrieb stören.

Der Erfindung liegt das Problem zugrunde, das bekannte landwirtschaftliche Fahrzeug derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand des Unteranspruchs 2.

Wesentlich ist die grundsätzliche Überlegung, die heckseitigen Kotflügel, also die im Heckbereich des Fahrzeugs und insbesondere den hinteren Bodeneingriffsmitteln bzw. Rädern zugeordneten Kotflügel, mehrteilig auszubilden, wobei ein feststehendes Kotflügelteil und ein verlagerbares Kotflügelteil, im weiteren als Verlängerungsteil bezeichnet, vorgesehen ist. Das Verlängerungsteil kann dann gegenüber dem feststehenden Kotflügelteil verstellt, also in seiner Position verändert werden. "Feststehend" meint in diesem Zusammenhang, dass das Kotflügelteil gegenüber dem landwirtschaftlichen Fahrzeug im Übrigen, jedenfalls bei der Abarbeitung eines landwirtschaftlichen Arbeitsprozesses, ortsfest ist. Indem nun das Verlängerungsteil verstellbar ist, lassen sich einsatzabhängig unterschiedlich große Teile des Umfangs des jeweiligen Bodeneingriffsmittels bzw. Reifens radial abdecken. Beispielsweise kann, wenn kein Anbaugerät und/oder Transportanhänger im Heckbereich mit dem landwirtschaftlichen Fahrzeug gekoppelt ist, ein größerer Teil des Umfangs des Bodeneingriffsmittels bzw. Reifens radial abgedeckt werden als in dem Fall, dass ein bestimmtes Anbaugerät und/oder ein bestimmter Transportanhänger an das Fahrzeug angekoppelt ist. Grundsätzlich ist es auch denkbar, für unterschiedliche Anbaugeräte und/oder Transportanhänger jeweils unterschiedliche Positionen, in denen das Verlängerungsteil das Bodeneingriffsmittel maximal abdeckt, vorzusehen. Im Einzelnen wird vorgeschlagen, dass die heckseitigen Kotflügel jeweils ein feststehendes Kotflügelteil und ein in seiner Position veränderbares Verlängerungsteil aufweisen und dass die Position des Verlängerungsteils einsatzabhängig veränderbar ist.

Im Folgenden wird die Erfindung anhand einer lediglich Ausführungsbeispiele darstellenden Zeichnung näher erläutert. In der Zeichnung zeigt
- Fig. 1: eine schematische Seitenansicht eines landwirtschaftlichen Fahrzeugs mit einem Arbeitsaggregat und

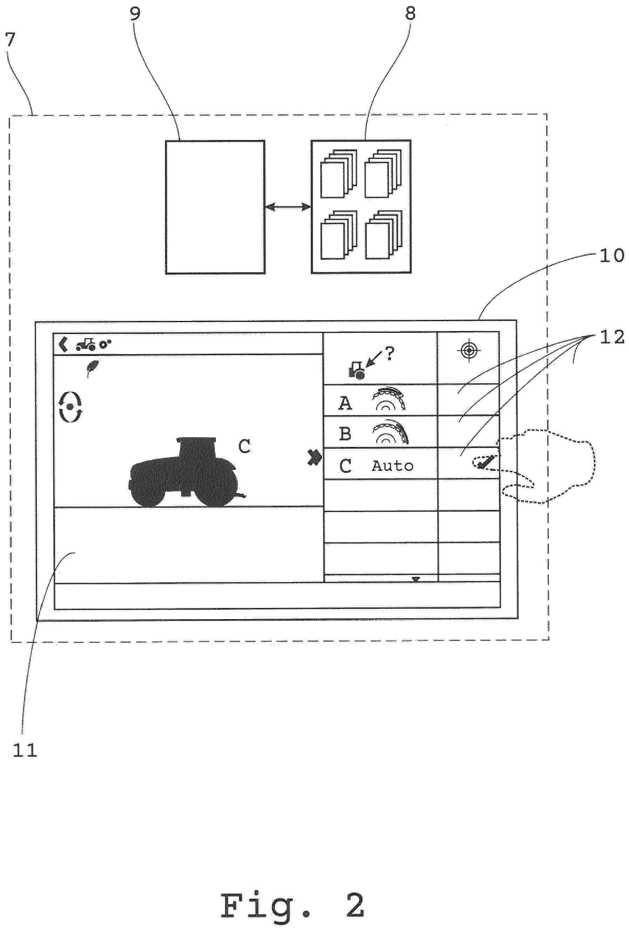

- Fig. 2: eine schematische Ansicht eines Fahrerassistenzsystems des landwirtschaftlichen Fahrzeugs gemäß Fig. 1.

Das in der Zeichnung dargestellte landwirtschaftliche Fahrzeug 1 dient der Nutzung bei der Abarbeitung eines landwirtschaftlichen Arbeitsprozesses. Hier und vorzugsweise handelt es sich bei dem Fahrzeug 1 um eine Zugmaschine in Form eines Traktors 2. Die vorschlagsgemäße Lösung ist auch auf alle anderen, im einleitenden Teil genannten landwirtschaftlichen Fahrzeuge anwendbar. Alle folgenden Ausführungen betreffen fast durchweg ein als Traktor 2 ausgestaltetes landwirtschaftliches Fahrzeug 1. Diese Ausführungen gelten für alle anderen Arten von landwirtschaftlichen Fahrzeugen entsprechend.

Das landwirtschaftliche Fahrzeug 1 ist mit mindestens einem Arbeitsaggregat 3 zur Durchführung oder Unterstützung landwirtschaftlicher Arbeit versehen. Ein solches Arbeitsaggregat 3 kann als vom landwirtschaftlichen Fahrzeug 1 separates Anbaugerät 4, also ein an das landwirtschaftliche Fahrzeug 1 als Trägerfahrzeug anbaubares Arbeitsaggregat 3, oder als Arbeitsaggregat 3, das fester Bestandteil des landwirtschaftlichen Fahrzeugs 1 ist, ausgeführt sein. Das landwirtschaftliche Fahrzeug 1 weist regelmäßig einen Fahrantrieb 5 und eine Lenkeinrichtung 6 auf, die hier ebenfalls den Arbeitsaggregaten 3 zugerechnet werden. Weiter kann das landwirtschaftliche Fahrzeug 1 mit einem Transportanhänger gekoppelt sein. Hinsichtlich bevorzugter Ausgestaltungen von Anbaugeräten 4 und Transportanhängern sei auf die Aufzählung im einleitenden Teil verwiesen.

Ferner weist das landwirtschaftliche Fahrzeug 1 hier und vorzugsweise ein Fahrerassistenzsystem 7 auf, das einen Speicher 8 zum Hinterlegen von Daten und eine Rechenvorrichtung 9 zur Verarbeitung der in dem Speicher 8 hinterlegten Daten umfasst. Das Fahrerassistenzsystem 7 verfügt hier und vorzugsweise außerdem über eine Benutzerschnittstelle 10, insbesondere eine graphische Benutzerschnittstelle 10. Eine Benutzerschnittstelle 10 weist üblicherweise ein Display 11, das ggf. als Touch-Screen ausgebildet ist, sowie eine oder mehrere Bedientasten 12 auf. Das Fahrerassistenzsystem 7 ist hier und vorzugsweise dafür eingerichtet, auf eine bedienerseitige Betätigung einer Bedientaste 12 hin, insbesondere auf einen Tastendruck hin, eine der jeweiligen Bedientaste 12 zugeordnete Aktion auszuführen. Die Aktion umfasst beispielsweise eine Steuerung und/oder Regelung eines oder mehrerer Arbeitsaggregate 3 des landwirtschaftlichen Fahrzeugs 1 basierend auf einem oder mehreren im Speicher 8 hinterlegten Parametern und/oder Parametersätzen.

Weiter weist das landwirtschaftliche Fahrzeug 1 auf seinen beiden Seiten zur abschnittsweisen radialen Abdeckung eines zugeordneten Bodeneingriffsmittels 13, hier Reifens 13, des Fahrzeugs 1 jeweils mindestens einen Kotflügel 14 auf. Bei dem im Folgenden beschriebenen Ausführungsbeispiel sind die Kotflügel 14 den Hinterrädern 15 bzw. deren Reifen 13 zugeordnet. Alle Ausführungen zu den Kotflügeln 14 sowie zu dem Traktor 2 gelten für alle anderen denkbaren Anwendungsbereiche entsprechend.

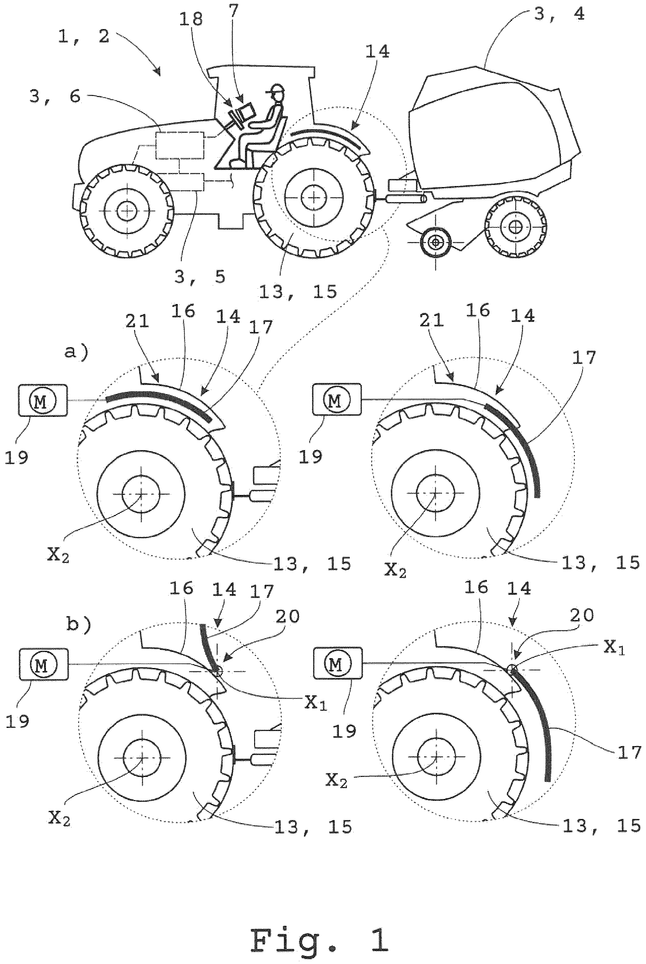

Im Folgenden ist im Sinne einer übersichtlichen Darstellung ausschließlich von dem in Fig. 1 dargestellten, in Fahrtrichtung linken Kotflügel 14 die Rede. Diese Ausführungen gelten für den in Fahrtrichtung rechten Kotflügel entsprechend.

Das in den Figuren dargestellte und insoweit bevorzugte Ausführungsbeispiel betrifft ein landwirtschaftliches Fahrzeug 1, insbesondere eine Zugmaschine, zur Nutzung bei der Abarbeitung eines landwirtschaftlichen Arbeitsprozesses, mit mindestens einem im Heckbereich mit dem landwirtschaftlichen Fahrzeug 1 gekoppelten Anbaugerät 4 und/oder Transportanhänger, mit Bodeneingriffsmitteln 13 und mit den Bodeneingriffsmitteln 13 zugeordneten, heckseitigen Kotflügeln 14, die jeweils einen Teil des Umfangs des zugeordneten Bodeneingriffsmittels 13 radial abdecken.

Wesentlich ist nun, dass die heckseitigen Kotflügel 14 jeweils ein feststehendes Kotflügelteil 16 und ein in seiner Position veränderbares Verlängerungsteil 17 aufweisen und dass die Position des Verlängerungsteils einsatzabhängig veränderbar ist.

Erfindungsgemäß ist, wie bei dem in den Figuren dargestellten Ausführungsbeispiel, ferner vorgesehen, dass die Position des Verlängerungsteils 17 automatisiert, insbesondere elektrisch oder hydraulisch, veränderbar ist.

Gemäß eines nicht beanspruchten Beispiels kann vorgesehen sein, dass die Position des Verlängerungsteils 17 vom Benutzer manuell veränderbar ist, wobei vorzugsweise das Verlängerungsteil 17 in der jeweils manuell eingestellten Position, insbesondere über eine Schraube, manuell gesichert werden kann.

"Manuell" meint hier, dass der Benutzer die Position des Verlängerungsteils 17 von Hand, gegebenenfalls unter Zuhilfenahme eines Werkzeugs, verändern kann. "Automatisiert" meint hier, dass das Verstellen des Verlängerungsteils 17, gegebenenfalls auf Anforderung durch den Benutzer hin, teilweise oder vollständig maschinell, insbesondere unter Verwendung einer Steuerungs- und/oder Regelungseinrichtung 18, erfolgt. Bei einer elektrischen Veränderung der Position wird in diesem Fall insbesondere ein Elektromotor 19 angesteuert, um das Verlängerungsteil 17 zu verstellen. Bei einer hydraulischen Veränderung der Position ist es entsprechend denkbar, eine hydraulische Pumpe anzusteuern, um das Verlängerungsteil 17 zu verstellen.

Weiter ist, wie zuvor bereits erläutert, hier und erfindungsgemäß vorgesehen, dass das landwirtschaftliche Fahrzeug 1 ein Fahrerassistenzsystem 7 aufweist, das einen Speicher 8 zum Hinterlegen von Daten, eine Rechenvorrichtung 9 zur Verarbeitung der in dem Speicher 8 hinterlegten Daten und eine Benutzerschnittstelle 10, die mindestens eine Bedientaste 12 bereitstellt, aufweist, und dass das Fahrerassistenzsystem 7 dafür eingerichtet ist, in einem manuellen Modus auf eine bedienerseitige Betätigung mindestens einer Bedientaste 12 der Benutzerschnittstelle 10 hin die Position des Verlängerungsteils 17 zu verändern, und/oder, dass das Fahrerassistenzsystem 7 dafür eingerichtet ist, in einem Automatikmodus die Position des Verlängerungsteils 17 automatisch zu verändern.

Das Fahrerassistenzsystem 7 stellt insbesondere sowohl einen manuellen Modus als auch einen Automatikmodus bereit, zwischen denen der Benutzer, beispielsweise über eine bedienerseitige Betätigung einer entsprechenden Bedientaste 12, auswählen kann.

Darüber hinaus ist hier und erfindungsgemäß vorgesehen, dass die Position des Verlängerungsteils 17 zwischen einer Minimalposition (Fig. 1a) und b), linke Darstellung) und einer Maximalposition (Fig. 1a) und b), rechte Darstellung) veränderbar ist, wobei in der Maximalposition ein größerer Teil des Umfangs des jeweiligen Bodeneingriffsmittels 13 als in der Minimalposition radial abgedeckt ist, vorzugsweise, dass die Minimalposition und/oder Maximalposition vom Fahrerassistenzsystem 7 abhängig von dem Anbaugerät 4 und/oder Transportanhänger und/oder abhängig von dem durchzuführenden landwirtschaftlichen Arbeitsprozess und/oder abhängig von der Fahrzeuggeschwindigkeit des landwirtschaftlichen Fahrzeugs 1 eingestellt wird, und/oder, dass die Maximalposition vom Fahrerassistenzsystem 7 abhängig von der Größe des jeweiligen Bodeneingriffsmittels 13 eingestellt wird.

Die Minimalposition ist hier und vorzugsweise diejenige Position des Verlängerungsteils 17, in der der Teil des Umfangs des zugeordneten Bodeneingriffsmittels 13, der radial vom Kotflügel 14 abgedeckt ist, immer, das heißt in allen denkbaren Anwendungsfällen, am kleinsten ist. Diese Position ist insbesondere durch einen mechanischen Anschlag definiert, der für alle Anwendungsfälle derselbe ist. Die Maximalposition ist hier und vorzugsweise diejenige Position des Verlängerungsteils 17, in der der Teil des Umfangs des zugeordneten Bodeneingriffsmittels 13, der radial vom Kotflügel 14 abgedeckt ist, immer, das heißt in allen denkbaren Anwendungsfällen, am größten ist. Diese Position ist insbesondere durch einen mechanischen Anschlag definiert, der für alle Anwendungsfälle derselbe ist. Die Minimalposition und/oder die Maximalposition kann aber auch einsatzabhängig variieren.

Darüber hinaus ist hier und vorzugsweise vorgesehen, dass das Verlängerungsteil 17 zwischen der Minimalposition und der Maximalposition linear oder um eine geometrische Achse X₁, X₂ schwenkbar verstellbar ist, vorzugsweise, dass das Verlängerungsteil 17 über eine Gelenkverbindung 20, die die geometrische Achse X₁ bildet, oder über eine Schienenführung 21 mit dem feststehenden Kotflügelteil 16 verbunden ist, weiter vorzugsweise, dass die Schienenführung 21 einen geraden Verlauf oder einen gebogenen Verlauf um die geometrische Achse X₂ aufweist.

### Bezugszeichenliste

- 1: Landwirtschaftliches Fahrzeug
- 2: Traktor
- 3: Arbeitsaggregat
- 4: Anbaugerät
- 5: Fahrantrieb
- 6: Lenkeinrichtung
- 7: Fahrerassistenzsystem
- 8: Speicher
- 9: Rechenvorrichtung
- 10: Benutzerschnittstelle
- 11: Display
- 12: Bedientaste
- 13: Bodeneingriffsmittel, Reifen
- 14: Kotflügel
- 15: Hinterrad
- 16: Feststehendes Kotflügelteil
- 17: Verlängerungsteil
- 18: Steuerungs- und/oder Regelungseinrichtung
- 19: Elektromotor
- 20: Gelenkverbindung
- 21: Schienenführung
- X₁: geometrische Achse
- X₂: geometrische Achse

## Patentansprüche

1. Landwirtschaftliches Fahrzeug, insbesondere Zugmaschine, zur Nutzung bei der Abarbeitung eines landwirtschaftlichen Arbeitsprozesses, mit mindestens einem im Heckbereich mit dem landwirtschaftlichen Fahrzeug (1) gekoppelten Anbaugerät (4) und/oder Transportanhänger, mit Bodeneingriffsmitteln (13) und mit den Bodeneingriffsmitteln (13) zugeordneten, heckseitigen Kotflügeln (14), die jeweils einen Teil des Umfangs des zugeordneten Bodeneingriffsmittels (13) radial abdecken, wobei die heckseitigen Kotflügel (14) jeweils ein feststehendes Kotflügelteil (16) und ein in seiner Position veränderbares Verlängerungsteil (17) aufweisen, wobei die Position des Verlängerungsteils (17) einsatzabhängig veränderbar ist, wobei die Position des Verlängerungsteils (17) automatisiert, insbesondere elektrisch oder hydraulisch, veränderbar ist, wobei das landwirtschaftliche Fahrzeug (1) ein Fahrerassistenzsystem (7) aufweist, das einen Speicher (8) zum Hinterlegen von Daten, eine Rechenvorrichtung (9) zur Verarbeitung der in dem Speicher (8) hinterlegten Daten und eine Benutzerschnittstelle (10), die mindestens eine Bedientaste (12) bereitstellt, aufweist, wobei das Fahrerassistenzsystem (7) dafür eingerichtet ist, in einem manuellen Modus auf eine bedienerseitige Betätigung mindestens einer Bedientaste (12) der Benutzerschnittstelle (10) hin die Position des Verlängerungsteils (17) zu verändern, und/oder, wobei das Fahrerassistenzsystem (7) dafür eingerichtet ist, in einem Automatikmodus die Position des Verlängerungsteils (17) automatisch zu verändern, wobei die Position des Verlängerungsteils (17) zwischen einer Minimalposition und einer Maximalposition veränderbar ist, wobei in der Maximalposition ein größerer Teil des Umfangs des jeweiligen Bodeneingriffsmittels (13) als in der Minimalposition radial abgedeckt ist, **dadurch gekennzeichnet, dass** das Fahrerassistenzsystem (7) dafür eingerichtet ist, die Minimalposition und/oder Maximalposition abhängig von dem Anbaugerät (4) und/oder Transportanhänger und/oder abhängig von dem durchzuführenden landwirtschaftlichen Arbeitsprozess und/oder abhängig von der Fahrzeuggeschwindigkeit des landwirtschaftlichen Fahrzeugs (1) einzustellen und/oder die Maximalposition abhängig von der Größe des jeweiligen Bodeneingriffsmittels (13) einzustellen.

2. Landwirtschaftliches Fahrzeug nach Anspruch 1, **dadurch gekennzeichnet, dass** das Verlängerungsteil (17) zwischen der Minimalposition und der Maximalposition linear oder um eine geometrische Achse (X₁, X₂) schwenkbar verstellbar ist, vorzugsweise, dass das Verlängerungsteil über eine Gelenkverbindung (20), die die geometrische Achse (X₁) bildet, oder über eine Schienenführung mit dem feststehenden Kotflügelteil (16) verbunden ist, weiter vorzugsweise, dass die Schienenführung einen geraden Verlauf oder einen gebogenen Verlauf um die geometrische Achse (X₂) aufweist.

## Claims

1. An agricultural vehicle, in particular a towing vehicle, for use in the execution of an agricultural operating procedure, with at least one attachment (4) and/or transport trailer coupled to the rear region of the agricultural vehicle (1), with ground engaging means (13) and with rear-side mud guards (14) associated with the ground engaging means (13) and which respectively radially cover a portion of the circumference of the associated ground engaging means (13), wherein the rear-side mud guards (14) respectively have a stationary mud guard portion (16) and an extension portion (17) the position of which can be changed, wherein the position of the extension portion (17) can be changed as a function of use, wherein the position of the extension portion (17) can be changed automatically, in particular electrically or hydraulically, wherein the agricultural vehicle (1) has a driver assistance system (7) which has a memory (8) for storing data, a computer device (9) for processing the data stored in the memory (8) and a user interface (10) which provides at least one operating button (12), wherein, when in a manual mode, the driver assistance system (7) is configured to change the position of the extension portion (17) following an actuation of at least one operating button (12) of the user interface (10) by the operator, and/or wherein, when in an automatic mode, the driver assistance system (7) is configured to automatically change the position of the extension portion (17), wherein the position of the extension portion (17) can be changed between a minimum position and a maximum position, wherein in the maximum position, a larger portion of the circumference of the respective ground engaging means (13) is covered than in the minimum position, **characterized in that** the driver assistance system (7) is configured to adjust the minimum position and/or maximum position as a function of the attachment (4) and/or transport trailer and/or as a function of the agricultural operating procedure to be carried out and/or as a function of the driving speed of the agricultural vehicle (1) and/or to adjust the maximum position as a function of the size of the respective ground engaging means (13).

2. The agricultural vehicle as claimed in claim 1, **characterized in that** the extension portion (17) can be adjusted between the minimum position and the maximum position linearly or pivotably about a geometric axis (X₁, X₂), preferably **in that** the extension portion is connected to the stationary mud guard (16) via an articulated joint (20) which forms the geometric axis (X₁), or via a track guide, more preferably **in that** the track guide has a straight path or a curved path about the geometric axis (X₂).

## Revendications

1. Véhicule agricole, en particulier machine de traction, à utiliser lors de l'exécution d'un processus de travail agricole, comprenant au moins un outil rapporté (4) et/ou une remorque de transport couplé au véhicule agricole (1) dans la zone arrière, comprenant des moyens de prise au sol (13) et des garde-boue arrière (14) qui sont associés aux moyens de prise au sol (13) et qui recouvrent radialement respectivement une partie de la périphérie du moyen de prise au sol associé (13), les garde-boue arrière (14) comportant respectivement une partie de garde-boue fixe (16) et une partie de prolongement (17) modifiable dans sa position, la position de la partie de prolongement (17) étant modifiable en fonction de l'utilisation, la position de la partie de prolongement (17) étant modifiable de manière automatisée, en particulier électriquement ou hydrauliquement, le véhicule agricole (1) comportant un système d'assistance à la conduite (7) qui comporte une mémoire (8) pour l'enregistrement de données, un dispositif de calcul (9) pour le traitement des données enregistrées dans la mémoire (8) et une interface utilisateur (10) qui comporte au moins une touche de commande (12), le système d'assistance à la conduite (7) étant agencé pour modifier, dans un mode manuel, la position de la partie de prolongement (17) à la suite d'un actionnement, côté utilisateur, au moins d'une touche de commande (12) de l'interface utilisateur (10), et/ou le système d'assistance à la conduite (7) étant agencé pour modifier, dans un mode automatique, la position de la partie de prolongement (17) automatiquement, la position de la partie de prolongement (17) étant modifiable entre une position minimale et une position maximale, dans la position maximale une partie de la périphérie du moyen de prise au sol respectif (13) plus grande que dans la position minimale étant recouverte radialement, **caractérisé en ce que** le système d'assistance à la conduite (7) est agencé pour régler la position minimale et/ou la position maximale en fonction de l'outil rapporté (4) et de la remorque de transport et/ou en fonction du processus de travail agricole à exécuter et/ou en fonction de la vitesse de véhicule du véhicule agricole (1) et/ou pour régler la position maximale en fonction de la taille du moyen de prise au sol respectif (13).

2. Véhicule agricole selon la revendication 1, **caractérisé en ce que** la partie de prolongement (17) est réglable de manière pivotante entre la position minimale et la position maximale linéairement ou autour d'un axe géométrique (X₁, X₂), préférentiellement **en ce que** la partie de prolongement est reliée à la partie de garde-boue fixe (16) par l'intermédiaire d'une liaison articulée (20), qui forme l'axe géométrique (X₁), ou par l'intermédiaire d'un guidage sur rail, plus préférentiellement **en ce que** le guidage sur rail présente un tracé rectiligne ou un tracé arqué autour de l'axe géométrique (X₂).
